# EUROPEAN PATENT APPLICATION

(11) **EP 4 844 746 A1**
(43) Date of publication of application: **25.11.2026**
(21) Application number: 26168677.8
(22) Date of filing: 27.03.2026
(51) Int. Cl.: G10L 15/02, G10L 15/04, G10L 15/05, G10L 15/26

(54) **SPEECH TRANSLATION SYSTEM BASED ON BLUETOOTH HEADSET**

(30) Priority: 19.05.2025 CN 202510639144
(71) Applicant: Vision Intelligence Co., Ltd., Hefei, Anhui 230094 (CN)
(72) Inventor: MA, Xiao, Beijing, 100012 (CN); WANG, Song, Hangzhou, 310018 (CN); WANG, Chao, Beijing, 100037 (CN)
(74) Representative: Valet Patent Services Limited

(57) **Abstract**

A speech translation system based on a Bluetooth headset is disclosed, relating to the technical field of Bluetooth headset speech translation. The system includes a speech acquisition module, a speech rate measurement module, a rhythm evaluation module, a speech regulation module, and a text verification module. The rhythm evaluation module extracts rhythm feature information from a speech signal collected by the Bluetooth headset from a user during a speech rate fluctuation period and analyzes the extracted information to evaluate the intensity of sentence rhythm variations in the speech during this period. The speech regulation module selects and executes corresponding speech processing strategies based on the evaluation result and performs dynamic regulation during execution. The problem that sentence rhythm variation caused by speech rate fluctuation cannot be dynamically regulated, achieving intelligent adaptation and full-process responsiveness of speech processing strategies, and optimizing the structure of the translation result, thereby significantly improving translation accuracy and semantic coherence.

## Description

### TECHNICAL FIELD

The present disclosure relates to the technical field of speech translation using Bluetooth headsets, and more particularly, to a speech translation system based on a Bluetooth headset.

### BACKGROUND

A speech translation system based on a Bluetooth headset is an intelligent communication system integrating speech recognition, machine translation, and speech synthesis technologies. The core of the system lies in realizing real-time acquisition, processing, and output of speech through a Bluetooth headset. By wearing the Bluetooth headset, a user can transmit spoken language in real time to a mobile terminal or an edge computing device. The system automatically recognizes the speech content, performs cross-language translation, and provides a feedback of the translation result in the form of speech in a target language, thereby enabling instant communication between two or more languages. The system is highly portable, hands-free, and natural to operate, and is particularly suitable for scenarios such as cross-border travel, international business, foreign language teaching, and assisted communication for special groups (e.g., hearing-impaired individuals). The system is significant in that it breaks down language barriers and improves communication efficiency between people, and represents an important direction in the integrated application of artificial intelligence and wearable devices.

In existing speech translation technologies based on Bluetooth headsets, the Bluetooth headset is generally used as a front-end speech acquisition and output device, in combination with an intelligent terminal (e.g., a smartphone or a dedicated translation device) to implement a complete speech translation process. The speech translation process mainly includes the following key stages. First, a user speaks an original language through the Bluetooth headset, and the headset transmits the speech signal in the form of audio data to a terminal device. Second, a speech recognition module (ASR) built in the terminal performs feature extraction and modeling analysis on the received audio data, and converts the audio data into corresponding text content. Third, a translation engine (MT) performs semantic understanding of the source language text and converts the source language text into text information of a target language, typically utilizing neural network machine translation technologies to improve accuracy and naturalness. Fourth, a speech synthesis module (TTS) converts the target language text into a natural speech signal. Finally, the translated speech is transmitted back to the user through the Bluetooth headset, thereby achieving a complete speech-to-speech cross-language interaction. In addition, the overall system may further comprise front-end processing modules such as speech enhancement, noise reduction, and echo cancellation, so as to maintain high translation accuracy and usability even in complex environments.

However, the existing technologies have the following deficiencies.

During use of a Bluetooth headset for speech translation by the user, when the user exhibits an obvious fluctuation in speech rate, for example, when the speech rate suddenly slows down from a faster pace while organizing thoughts, or when the speech rapidly resumes after a pause, a rhythm abrupt change occurs in the time dimension of the speech signal. Such situations are common when the user speaks while thinking, expresses complex content, or temporarily changes sentence structures, in which case the temporal interval and beat structure of the speech are difficult to maintain stable. Since the Bluetooth headset merely serves as a front-end audio acquisition device and does not possess rhythm change perception capability, and since back-end speech processing modules of the system typically segment and process audio streams based on fixed frame segmentation windows, silence thresholds, and endpoint detection algorithms, frame segmentation errors are likely to occur when speech rate abruptly changes. Such errors may include mis-segmenting a semantically complete utterance into two segments, or incorrectly merging two semantically independent utterances into one, which causes misalignment of inputs to the speech recognition model and leads to issues such as syllable mis-segmentation and phoneme overlap. Moreover, existing Bluetooth headset-based speech translation technologies cannot dynamically regulate speech processing strategies according to the intensity of abrupt rhythm changes in user speech during obvious speech rate fluctuations, and instead perform uniform frame processing under conventional speech rate modes. This often results in incomplete capture of speech features or mixing of information between adjacent utterances, thereby causing speech recognition errors such as word order disorder, loss of key words, and breakage of semantic structures, which severely affect both the accuracy of the final translation content and the continuity of user communication.

The information disclosed in the BACKGROUND above is provided solely for enhancing the understanding of the background of the present disclosure, and therefore may include information that does not constitute prior art known to those skilled in the art.

### SUMMARY

An object of the present disclosure is to provide a speech translation system based on a Bluetooth headset, so as to overcome the problems described in the background of this disclosure.

To achieve the above object, the following technical solutions are provided. A speech translation system based on a Bluetooth headset, comprising: a speech acquisition module configured to acquire speech signal from a user by the Bluetooth headset, preprocess the acquired speech signal, and divide the preprocessed speech signal into a continuous frame sequence according to a preset frame length and a preset frame shift; a speech rate measurement module configured to establish a time window based on the continuous frame sequence, analyze a variation in a speech rate within the time window, determine a time period in which the user exhibits a significant fluctuation in the speech rate, and identify the determined time period as a speech rate fluctuation period, wherein the significant fluctuation in the speech rate is defined as a fluctuation amplitude exceeding a preset threshold; a rhythm evaluation module configured to extract rhythm feature information from the speech signal acquired by the Bluetooth headset within the speech rate fluctuation period, analyze the extracted rhythm feature information, and evaluate an intensity of sentence rhythm variation within the speech rate fluctuation period; a speech regulation module configured to select and execute a corresponding speech processing strategy according to the evaluation result, and to perform dynamic regulation during an execution process; and a text verification module configured to perform a language structure and word order verification and adjustment on a recognized text after speech recognition, thereby ensuring that a translated text complies with grammar rules of a target language and maintains semantic coherence.

Preferably, the speech rate measurement module is further configured to: set a size of the time window based on the continuous frame sequence, and divide the time window into a plurality of time segments; analyze the variation in the speech rate for each time segment, comprising analyzing a time interval and a variation in speech energy between adjacent frames, and calculating a fluctuation amplitude of the speech rate for each time segment; and determine a time segment in which the fluctuation amplitude exceeds a preset threshold as the time period in which the user exhibits a significant fluctuation in speech rate, and identify the determined time segment as the speech rate fluctuation period, the fluctuation amplitude is determined by calculating a ratio of the time interval between the adjacent frames to a difference in speech energy between the adjacent frames.

Preferably, the rhythm evaluation module is configured to: extract rhythm feature information from the speech signal acquired by the Bluetooth headset within the speech rate fluctuation period, and preprocess the extracted rhythm feature information; extract acoustic fluctuation feature information and spectral configuration distribution information from the preprocessed rhythm feature information, and analyze the extracted acoustic fluctuation feature information and the extracted spectral configuration distribution information to respectively generate a speech energy fluctuation coefficient and a speech spectrum dispersion index; construct a rhythm abrupt change intensity evaluation model based on the generated speech energy fluctuation coefficient and the generated speech spectrum dispersion index, and generate a rhythmic mutation index through weighted summation; and determine a preset threshold interval of the rhythmic mutation index, compare the generated rhythmic mutation index with the preset threshold interval, and evaluate, according to a comparison result, an intensity of rhythm abrupt change in expression by the user during the speech rate fluctuation period.

Preferably, the speech energy fluctuation coefficient is generated by: extracting the acoustic fluctuation feature information from the preprocessed rhythm feature information, the acoustic fluctuation feature information comprising an energy value EVⁱ and a zero-crossing rate ZCRⁱ of an i-th frame of the speech signal acquired by the Bluetooth headset during the speech rate fluctuation period, wherein i = 1, 2, 3, ..., k, and k is a positive integer; and calculating the speech energy fluctuation coefficient according to an expression $EFC = ln \left[1+\frac{1}{k}∗{\sum }_{i = 1}^{k} \left[{\left({EV}^{i}\right)}^{2}∗\left({ZCR}^{i}+1\right)\right]\right]$, wherein EFC represents the speech energy fluctuation coefficient.

Preferably, the speech spectrum dispersion index is generated by: extracting the spectral configuration distribution information from the preprocessed rhythm feature information, comprising acquiring spectral feature information of i-th frame of the speech signal acquired by the Bluetooth headset during the speech rate fluctuation period; and constructing, based on the spectral feature information of the i-th frame, a Mel-frequency cepstral coefficient vector, expressed as: ${MFCC}^{i} = \left[{mfcc}_{j}^{i}\right] = \left[{mfcc}_{1}^{i}, {mfcc}_{2}^{i}, ⋯, {mfcc}_{g}^{i}\right]$, wherein MFCCⁱ represents the Mel-frequency cepstral coefficient vector of the i-th frame, comprising g components, ${mfcc}_{j}^{i}$ represents a Mel-frequency cepstral coefficient corresponding to the j-th cepstral component of the i-th frame, wherein i = 1, 2, 3, ..., k, j = 1, 2, 3, ..., g, and k and g are positive integers; calculating a cepstral feature mean offset value based on the Mel-frequency cepstral coefficient vector of the i-th frame according to expressions ${mfcc}_{j}^{-} = \frac{1}{k} ∗ {\sum }_{i = 1}^{k} {mfcc}_{j}^{i}$ and ${M}^{i} = \frac{1}{g} ∗ {\sum }_{j = 1}^{g} \left|{mfcc}_{j}^{i}-{mfcc}_{j}^{-}\right|$, wherein ${mfcc}_{j}^{-}$ represents an average value of the Mel-frequency cepstral coefficient corresponding to the j-th cepstral component over all frames, and Mⁱ represents the cepstral feature mean offset value of the i-th frame; calculating a cepstral distribution dispersion value based on the Mel-frequency cepstral coefficient vector of the i-th frame according to expressions ${μ}^{i} = \frac{1}{g} {\sum }_{j = 1}^{g} {mfcc}_{j}^{i}$ and ${V}^{i} = \frac{1}{g} ∗ {\sum }_{j = 1}^{g} {\left({mfcc}_{j}^{i}-{μ}^{i}\right)}^{2}$, wherein µⁱ is a mean value of the Melfrequency cepstral coefficients corresponding to all cepstral components in the i-th frame, and V' represents the cepstral distribution dispersion value of the i-th frame; and calculating the speech spectrum dispersion index according to expression $SDI = \frac{1}{k} ∗ {\sum }_{i = 1}^{k} exp \left({M}^{i}+{V}^{i}\right)$, wherein SDI represents the speech spectrum dispersion index.

Preferably, the rhythm abrupt change intensity evaluation model is constructed based on the generated speech energy fluctuation coefficient EFC and the generated speech spectrum dispersion index SDI, and the rhythmic mutation index is generated through weighted summation according to an expression RMI = ω₁ * EFC + ω₂ * SDI, wherein RMI represents the rhythmic mutation index, and ω₁ and ω₂ are non-zero weight coefficients respectively corresponding to the speech energy fluctuation coefficient EFC and the speech spectrum dispersion index SDI, and ω₁ + ω₂ = 1.

Preferably, determining the preset threshold interval [RMI^{min}, RMI^{max}] of the rhythmic mutation index, comparing the generated rhythmic mutation index RMI with the preset threshold interval, and evaluate, according to a comparison result, an intensity of rhythm abrupt change in expression by the user during the speech rate fluctuation period comprises: evaluating the intensity of rhythm abrupt change in expression by the user during the speech rate fluctuation period as a low intensity in case of RMI < RMI^{min}; evaluating the intensity of rhythm abrupt change in expression by the user during the speech rate fluctuation period as a medium intensity in case of RMI^{min} ≤ RMI ≤ RMI^{max}; and evaluating the intensity of rhythm abrupt change in expression by the user during the speech rate fluctuation period as a high intensity in case of RMI > RMI^{max}.

Preferably, for selecting and executing the corresponding speech processing strategy according to the evaluation result, the speech regulation module is configured to: in case of the low intensity, select and execute the speech processing strategy comprising: dividing the speech signal into frames using default frame segmentation window parameters, maintaining a standard silence duration threshold and a fixed endpoint detection method, and completing speech segment delimitation in a conventional manner; in case of the medium intensity, select and execute the speech processing strategy comprising: adjusting a size of a speech frame segmentation window such that a window duration is increased, increasing a frame overlap ratio, and extending the silence duration thresholds to alleviate a risk of segmentation misjudgment caused by rhythm fluctuation; and in case of the high intensity, select and execute the speech processing strategy comprising: enabling a cross-segment semantic context retention mechanism and enabling a delayed endpoint judgment mode after the adjusting the frame segmentation window and the silence threshold, to avoid a speech segment segmentation error and recognition timing disorder at a rhythm abrupt change point; and for performing the dynamic regulation during the execution process, the speech regulation module is configured to: continuously monitor a frame-level spectral energy variation trend of the speech signal and a variation in the silence duration between speech segments during the execution process; immediately switch to a higher-level speech processing strategy, update the speech frame segmentation window parameters and the silence duration threshold, and enable a cross-segment semantic retention function, when the rhythmic mutation index is detected to continuously increase in successive frames and to exceed a maximum threshold corresponding to a current strategy level; and downgrade the current speech processing strategy, switch to the default frame segmentation parameters, and disable an extended processing mechanism, when the rhythmic mutation index is detected to continuously decrease in successive frames and to fall below a minimum threshold corresponding to the current strategy level, thereby realizing real-time dynamic regulation on the processing strategy.

The above technical solutions of the present disclosure have the following technical effects and advantages.

The present disclosure constructs a speech rate measurement module and a rhythm evaluation module to achieve precise recognition of speech rate fluctuations and rhythm abrupt changes during vocal expression by a user. Specifically, in the context of Bluetooth headset-based speech translation, the system addresses issues of unstable speech rate caused by user thinking, pausing, or sentence structure switching, by enabling real-time monitoring and determination of fluctuation features at the frame level of the speech signal. By introducing two composite acoustic indicators, that is, a speech energy fluctuation coefficient and a speech spectrum dispersion index, and constructing a rhythmic mutation index for intensity quantification, the solution provides a mathematical modeling and judgment capability for sentence rhythm variations, thereby offering precise decision support for subsequent processing strategies and effectively overcoming the prior art limitation of being unable to perceive or quantify rhythm abrupt changes.

The present disclosure links the evaluation results with speech processing strategies through the speech regulation module. According to the intensity of rhythm abrupt changes, the system automatically switches to different levels of parameter combinations, including adjustments of frame segmentation windows, delayed silence duration determination, and context semantic retention mechanisms, thereby achieving fine-grained, dynamic, and scenario-adaptive speech segment processing. Particularly under high-intensity abrupt changes, the system not only avoids issues of sentence truncation and semantic disorder caused by misaligned frame segmentation in conventional strategies, but also enhances endpoint recognition robustness through a delayed segment judgment mechanism, resulting in smoother recognition flow for complete speech segments and improved fault tolerance and translation stability for complex speech structures.

The present disclosure employs a text verification module to perform structural checks and semantic reconstruction on recognized text after speech recognition, ensuring that the translation output is not only grammatically compliant but also maintains logical coherence and natural language fluency, thereby further enhancing the user experience. The overall solution completes a closed-loop processing chain from front-end detection, process regulation, to back-end semantic optimization using only the Bluetooth headset as the speech acquisition channel, without reliance on additional hardware. This significantly improves the intelligent responsiveness of the speech translation system to rhythmically complex expressions, and demonstrates strong practical value and industrial application potential.

### BRIEF DESCRIPTION OF THE DRAWINGS

In order to more clearly illustrate the technical solutions of the embodiments of the present disclosure or the prior art, a brief description of the drawings used in the embodiments is provided below. It is to be understood that the drawings described below are merely some embodiments disclosed in the present invention, and additional drawings can be obtained by those skilled in the art based on these drawings.
FIG. 1 is a schematic block diagram of a speech translation system based on a Bluetooth headset according to the present invention;
FIG. 2 is a system mind map of the speech translation system based on a Bluetooth headset according to the present invention.

### DETAILED DESCRIPTION OF THE EMBODIMENTS

The exemplary embodiments will be described in more detail with reference to the drawings. It is to be understood that the exemplary embodiments may be implemented in various forms and should not be construed as being limited to the examples set forth herein. Instead, the purpose of providing these exemplary embodiments is to make the description of the present disclosure completer and more comprehensive, and to fully convey the concepts of the exemplary embodiments to those skilled in the art.

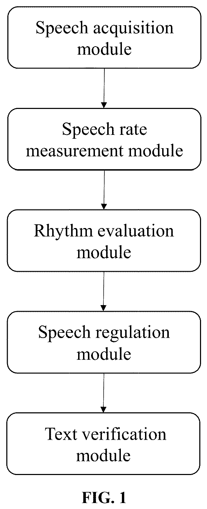

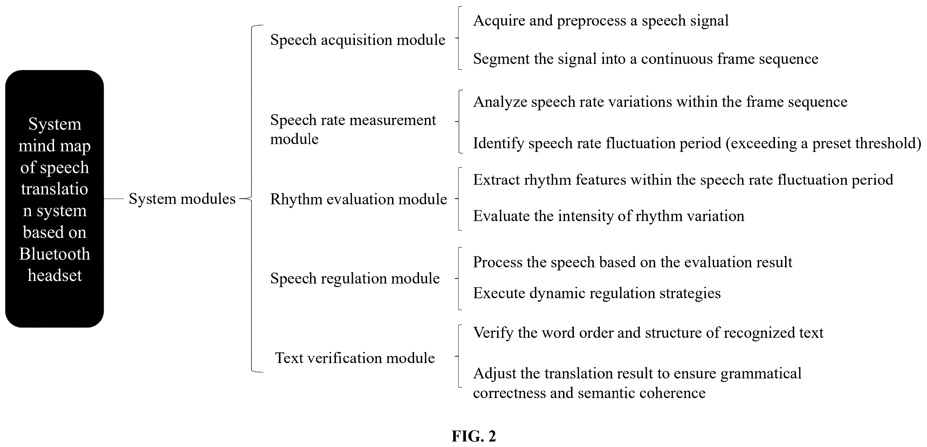

The present disclosure provides a speech translation system based on a Bluetooth headset, as shown in FIGS. 1 and 2, comprising a speech acquisition module, a speech rate measurement module, a rhythm evaluation module, a speech regulation module, and a text verification module.

The speech acquisition module acquires speech signal from a user by the Bluetooth headset, preprocesses the acquired speech signal, and divides the preprocessed speech signal into a continuous frame sequence according to a preset frame length and a preset frame shift.

The Bluetooth headset acquires the speech signal form the user through a built-in microphone, typically outputting the speech signal as a raw audio stream. Before being subsequently processed, the speech signal is preprocessed to improve signal quality. The first step of preprocessing typically involves noise reduction, which can be performed using frequency-domain filtering or adaptive filtering algorithms to remove background noise. Next, pre-emphasis processing is performed, applying a high-pass filter to enhance the high-frequency components of the speech signal, thereby compensating for attenuation in the high-frequency range and improving the clarity and detail of the signal. Finally, signal normalization is performed by adjusting the amplitude range of the audio signal to maintain consistency, preventing excessively high or low signal amplitudes from affecting subsequent analysis and processing. These preprocessing steps ensure the quality of the speech signal and provide a stable foundation for subsequent analysis and feature extraction.

After being preprocessed, the audio signal is divided according to a preset frame length and a preset frame shift. A common approach uses windowing techniques, such as short-time Fourier transform (STFT), to segment the audio signal into multiple frames corresponding to short time windows. The frame length determines the number of sample points contained in each frame, typically 20 to 40 milliseconds, while the frame shift represents the step size by which the window moves each time, typically 10 milliseconds or 20 milliseconds. In this manner, the speech signal is segmented into multiple overlapping frames, each representing signal features within a specific time interval. Frame segmentation not only facilitates subsequent feature extraction (such as MFCC, spectrogram, etc.) but also ensures that dynamic changes in the speech signal can be captured within small time windows, avoiding the loss of important information due to excessively large time windows.

The purpose of these steps is to improve the accuracy of subsequent speech processing modules, such as speech recognition or translation. By performing preprocessing to remove noise and unnecessary frequency components, the speech signal becomes cleaner and clearer, facilitating subsequent analysis. Frame segmentation divides the continuous speech signal into manageable small segments, allowing models to perform more precise feature extraction and analysis within each time interval. Information within each frame can be processed independently, which helps prevent loss of information during speech rate variations or pauses, thereby ensuring that abrupt changes or long pauses in the speech signal do not result in recognition errors or inaccurate translation. Accordingly, these processing steps are critical for enhancing the accuracy and stability of the speech translation system.

The speech rate measurement module establishes a time window based on the consecutive frame sequence and analyzes a variation in a speech rate within the time window, determine a time period in which the user exhibits a significant fluctuation in the speech rate, and identify the determined time period as a speech rate fluctuation period. The significant fluctuation in the speech rate is defined as a fluctuation amplitude exceeding a preset threshold.

In the present embodiment, within the speech rate measurement module, a size of the time window is set based on the continuous frame sequence, and the time window is divided into multiple time segments. The variation in speech rate within each time segment is analyzed, specifically by examining the time interval and change in speech energy between adjacent frames, to calculate the amplitude of speech rate fluctuation for the time segment. A time segment in which the fluctuation amplitude in the speech rate exceeds a preset threshold are identified as time periods in which the user exhibits significant fluctuation in the speech rates, and are designated as the speech rate fluctuation period. The fluctuation amplitude in the speech rate is determined by calculating the ratio of the time interval to the difference in speech energy between adjacent frames.

In implementing the process of "setting a size of the time window based on the continuous frame sequence and dividing the time window into multiple time segments," a fixed size of the time window is first established according to the frame sequence of the speech signal, typically set in milliseconds. The size of the time window is generally adjusted based on the rhythm of the language and the requirements of speech processing, with a common window size ranging from 20ms to 40ms. The speech signal is then segmented according to the preset window size. Specifically, each time window contains multiple frames (typically segmented according to a preset frame length and a preset frame shift), and overlap between time segments is maintained to avoid information loss. The overlap is typically set to 10ms to 20ms, corresponding to the frame shift, to ensure that signal variations within each time segment are fully captured. In this way, a continuous signal can be segmented so that the signal within each time segment is consistent, facilitating subsequent analysis. This approach not only enables finer-grained analysis of speech rate variations but also better accommodates rapid changes in the speech signal, particularly when the user exhibits significant fluctuations in speech rate, ensuring that no critical speech variations are missed. When implemented in software, the frame segmentation and time window settings are typically achieved through signal processing functions or libraries, ensuring that the process is efficient and accurate.

In order to implement the step of "analyzing the variation in the speech rate for each time segment, comprising analyzing a time interval and a variation in speech energy between adjacent frames, and calculating a fluctuation amplitude of the speech rate for the time segment", a detailed analysis of the frames within each time segment is first performed. The time interval refers to the temporal difference between adjacent frames, which is typically determined based on the preset frame length and the preset frame shift. Software can assess the variations in speech rate within a time segment by calculating the time intervals between adjacent frames. Next, changes in speech energy are generally represented by calculating the energy within each frame, with changes in energy reflecting fluctuations in the intensity of the speech signal. In software implementations, the short-time energy calculation approach may be used, in which the squared average of the amplitude of each frame is computed, and energy fluctuations within each time segment are analyzed based on changes in signal strength. The speech rate fluctuation amplitude for each time segment can be determined by combining the time intervals between adjacent frames with the differences in speech energy, for example by calculating the ratio of the time interval to the energy difference between adjacent frames, thereby reflecting the intensity of speech rate fluctuations within the time segment. This calculation assists in identifying periods of significant fluctuation in the speech rate, particularly during rapid or slow user speech, and provides precise information for subsequent speech processing. This approach can be implemented using existing signal processing tools and software libraries (such as MATLAB or NumPy of Python), and may employ techniques such as fast Fourier transform (FFT) to efficiently process and calculate the time intervals and speech energy changes for each time segment.

To implement the step of "determining a time segment in which the fluctuation amplitude exceeds a preset threshold as the time period in which the user exhibits a significant fluctuation in speech rate, and identifying the determined time segment as the speech rate fluctuation period", a reasonable threshold for speech rate fluctuation amplitude is first established. This threshold is typically determined based on empirical experience in practical applications or adjusted using experimental data to ensure that normal speech rate variations can be distinguished from significant fluctuations. During implementation, the software system traverses the speech rate fluctuation amplitude of each time segment and compares the speech rate fluctuation amplitude with the preset threshold. If the amplitude in a given time segment exceeds the threshold, that time segment is considered to exhibit significant fluctuation in the speech rates. The software can perform this comparison using conditional statements (e.g., if statements) to evaluate time segments individually. If the condition is satisfied, the time segment is designated as a speech rate fluctuation period. During this designation process, the software records the start and end times of the time segment to accurately identify the significant fluctuation period. To further improve accuracy, the system may also filter out brief or incidental fluctuations based on duration. For example, if the speech rate fluctuation amplitude exceeds the threshold but persists for only a short duration (e.g., less than 50ms), the time segment can be ignored and not considered a significant fluctuation period. In this manner, the system effectively distinguishes periods of significant fluctuation in the speech rate caused by thinking, rapid topic switching, or other factors, providing reliable input data for subsequent speech recognition, translation, or other processing. Such processing can be implemented in software using signal processing algorithms, ensuring that the system efficiently identifies and designates speech rate fluctuation periods, thereby reducing misjudgment and enhancing the accuracy and performance of speech processing.

The statement "the significant fluctuation in the speech rate is defined as a fluctuation amplitude exceeding a preset threshold" means that, when analyzing a speech signal, if the speech rate variation within a given time segment exceeds the preset threshold, the speech in that segment is considered to exhibit a significant fluctuation in speech rate. This threshold is typically set based on experimental results or empirical experience to ensure that the system can effectively distinguish between normal everyday variations and drastic changes in speech rate, thereby avoiding erroneous responses to minor or irrelevant fluctuations. Regarding the statement "the fluctuation amplitude in the speech rate is determined by calculating the ratio of the time interval to the difference in speech energy between adjacent frames," the core of this calculation lies in measuring speech rate fluctuations by observing changes in the speech signal between adjacent time segments. Specifically, the time interval reflects the temporal difference between adjacent frames, which is typically shorter during faster speech and longer during slower speech. The difference in speech energy reflects variations in signal intensity, which are generally more pronounced during sudden acceleration or deceleration of speech. By calculating the ratio of the time interval to the energy difference between adjacent frames, a value representing the intensity of the speech rate fluctuation can be obtained. When this value exceeds the predetermined threshold, the speech rate fluctuation within that segment is considered significant. This approach effectively captures important variations in the speech signal, providing accurate reference information for subsequent speech processing by the system.

The rhythm evaluation module extracts rhythm feature information from the speech signal acquired by the Bluetooth headset within the speech rate fluctuation period, analyzes the extracted rhythm feature information, and evaluates an intensity of sentence rhythm variation within the speech rate fluctuation period.

In the present embodiment, within the rhythm evaluation module, rhythm feature information is extracted from the speech signal acquired by the Bluetooth headset during the speech rate fluctuation period and is preprocessed upon acquisition. Acoustic fluctuation feature information and spectral configuration distribution information are extracted from the preprocessed rhythm feature information and analyzed to respectively generate a speech energy fluctuation coefficient and a speech spectral dispersion index. A rhythm abrupt change intensity evaluation model is constructed based on the generated speech energy fluctuation coefficient and speech spectral dispersion index, and a rhythmic mutation index is obtained by weighted summation. A preset threshold range for the rhythmic mutation index is established, and the generated rhythmic mutation index is compared with this threshold range. Based on the comparison, the intensity of rhythm abrupt change in the expression during the speech rate fluctuation period is evaluated.

In implementing the step of "extracting rhythm feature information from the speech signal acquired by the Bluetooth headset during the speech rate fluctuation period," a speech signal analysis software system can process the speech data in the time segment on a frame-by-frame basis, converting the continuous speech waveform into a series of frame-structured speech samples and extracting fundamental parameters in each frame that reflect rhythm variation characteristics. Specifically, based on the frame-segmented speech signal, a short-time Fourier transform (STFT) and a Mel filter bank can be employed to obtain the spectral structure of each frame, and further features such as short-time energy, zero-crossing rate, spectral energy distribution, and Mel-frequency cepstral coefficients (MFCCs) can be extracted. These features are arranged sequentially in the time domain to construct complete rhythm feature information. All of these features are directly quantifiable numerical data, and automated extraction can be realized using audio signa 1 processing libraries (such as Librosa or the MATLAB speech toolbox), ensuring that the physical attributes of rhythm variations are captured and represented in the digital domain for system analysis.

The extracted rhythm feature information is preprocessed to improve the accuracy and stability of subsequent parameter calculations and to prevent data deviations caused by outliers, noise interference, or inconsistent dimensions. The preprocessing operations typically include three aspects. First, all extracted frame-level feature data are normalized (e.g., using z-score standardization or min-max scaling) to eliminate the effects of differing feature units, allowing all data types to be compared on the same scale. Second, short-term abnormal data points occurring in consecutive frames are smoothed, for example by applying a moving average or median filtering, to reduce the misleading influence of sudden frame variations on overall fluctuation assessment. Third, feature selection algorithms (such as principal component analysis (PCA) or feature ranking) are applied to compress redundant or weakly correlated dimensions, retaining the core features most representative for rhythm evaluation. These preprocessing steps can be executed in a software pipeline after the audio feature matrix is generated, ensuring that the processed rhythm feature information possesses high comparability, robustness, and well-structured mathematical properties, thereby facilitating accurate computation of coefficients and reliable operation of the evaluation model.

In implementing the step of "extracting acoustic fluctuation feature information and spectral configuration distribution information from the preprocessed rhythm feature information," the normalized and denoised frame-level speech feature matrix is first specifically segmented and structured. For the acoustic fluctuation feature information, key parameters reflecting the temporal amplitude variations of the speech signal, namely, short-time energy values and zero-crossing rate values, are selected to construct numerical pairs representing the strength variations and amplitude fluctuations across different frames. Specifically, the system can extract the energy value and zero-crossing rate for each frame according to the frame index and arrange them sequentially in time to form a two-dimensional feature sequence. For the spectral configuration distribution information, the previously extracted frame-level Mel-frequency cepstral coefficient (MFCC) is further processed to obtain two quantifiable features representing frequency-domain fluctuation characteristics. First, the mean absolute deviation between MFCC of each frame and the average value of the corresponding dimension is calculated as the cepstral shift strength. Second, the variance of the overall MFCC distribution is calculated to reflect the discrete trend of the frequency components. In this way, the rhythm feature information is further separated into two well-structured, dimensionally explicit feature sets with independent evaluative value. Both feature sets are numeric data derived through mathematical operations at the audio feature matrix level by the software system, and are suitable for use as input to subsequent evaluation models.

In implementing the step of "determining a preset threshold range of the rhythmic mutation index," a data-driven approach can be employed to perform statistical modeling and interval division on historical speech samples, thereby establishing a standard criterion suitable for evaluation. Specifically, during the training phase, a large number of speech samples exhibiting various degrees of rhythm variation are collected. For each sample, rhythm feature information consistent with the current processing procedure is extracted, and corresponding speech energy fluctuation coefficients and speech spectral dispersion indices are generated. These values are then combined according to predetermined weights to produce a rhythmic mutation index. Subsequently, the index values can be clustered or ranked according to the actual rhythm state labels of the samples (e.g., "stable," "slight abrupt change," or "severe abrupt change"), and their distribution intervals can be statistically analyzed. For example, percentile methods or Gaussian fitting can be applied to define boundary values for abrupt change intensity. Ultimately, a static threshold range can be established within the statistically significant coverage of the samples, for example, 0.0 to 0.4 corresponding to stable, 0.4 to 0.7 to moderate abrupt change, and 0.7 to 1.0 to severe abrupt change. This range can be fixed in the system as configurable parameters and adaptively adjusted based on the performance of subsequent model operations. The entire process can be executed through software modules for data annotation, clustering algorithms, and parameter management, without requiring manually set subjective values, thereby ensuring that the division criteria possess statistical validity and system stability.

In this embodiment, the speech energy fluctuation coefficient is generated by: extracting the acoustic fluctuation feature information from the preprocessed rhythm feature information, the acoustic fluctuation feature information comprising an energy value EVⁱ and a zero-crossing rate ZCRⁱ of an i-th frame of the speech signal acquired by the Bluetooth headset during the speech rate fluctuation period, wherein i = 1, 2, 3, ..., k, and k is a positive integer.

In the speech signals acquired by the Bluetooth headset during the speech rate fluctuation period, the energy value and zero-crossing rate of each frame can be extracted through audio signal processing algorithms in software and represent two of the most commonly used low-order acoustic features. First, the energy value (EV) refers to the short-term energy intensity of a speech signal within a frame, reflecting the overall amplitude of the waveform in that frame. The acquisition method involves dividing the preprocessed speech signal into a series of equal-length frames and, for each frame, summing or averaging the squares of the sampled points to obtain the total energy of the frame. This process can be implemented using a sliding window to ensure continuity between frames. A higher energy value indicates that the speech signal in the frame is louder or has stronger impact, which commonly occurs in stressed syllables, plosive sounds, or rapid onset sounds. Second, the zero-crossing rate (ZCR) refers to the number of times the waveform crosses the zero axis, either from positive to negative or from negative to positive, within a single frame. It reflects the oscillation or irregularity of the waveform. Specifically, for each frame, consecutive sampled points are compared pairwise, and each occurrence of a sign change is counted as a zero-crossing event; the total count is then divided by the number of samples in the frame to yield a normalized ZCR value. A higher ZCR typically corresponds to silence segments, fricatives, or nasalized sounds containing more high-frequency details, whereas a lower ZCR generally appears in vowels, speech pauses, or low-frequency smooth utterances. Both types of data can be automatically extracted in a software environment using standard audio analysis libraries (such as Librosa in Python or the Audio Toolbox in MATLAB) without manual intervention. They offer high repeatability and numerical stability and serve as foundational input features for constructing a speech rhythm analysis model.

The speech energy fluctuation coefficient is calculated according to an expression $EFC = ln \left[1+\frac{1}{k}∗{\sum }_{i = 1}^{k} \left[{\left({EV}^{i}\right)}^{2}∗\left({ZCR}^{i}+1\right)\right]\right]$, where EFC represents the speech energy fluctuation coefficient.

The calculation of the speech energy fluctuation coefficient is designed to comprehensively measure the synergistic fluctuation characteristics of the speech signal in terms of amplitude intensity and waveform oscillation frequency during a speech rate fluctuation period, thereby quantifying the severity of speech rhythm variation. First, (EVⁱ)² squares the energy value of each frame to amplify the weight of high-energy frames, so that frames in which the speech intensity suddenly rises during periods of speech rate fluctuation contribute more significantly to the perception of overall fluctuation. Second, (ZCRⁱ+1) represents a regularized form of the zero-crossing rate for the frame. Here, ZCRⁱ measures the number of times the speech waveform crosses zero within a frame, indicating the frequency of waveform oscillation; larger values correspond to more frequent fluctuations. The addition of 1 prevents the multiplication term from becoming zero. The product of these two components embodies a key principle: neither high energy alone nor high oscillation alone is sufficient to represent pronounced rhythm variation. Only when both energy and waveform oscillation are simultaneously elevated within the same frame does a significant rhythm fluctuation exist. Therefore, the "energy × oscillation" value of each frame is averaged over k frames (i.e., summed across k frames and divided by k) to obtain the overall synergistic fluctuation intensity for the speech rate fluctuation period. Finally, the natural logarithm is applied to compress extreme values, smooth out outliers, enhance discriminability for medium-to-low amplitude fluctuations, and ensure numerical stability and comparability of the coefficient. Overall, the expression exhibits a compact mathematical structure and, grounded in the physical properties of speech, effectively captures the comprehensive manifestation of rhythm fluctuations.

The magnitude of the speech energy fluctuation coefficient is positively correlated with the intensity of sentence rhythm variation during periods of speech rate fluctuation. That is, a larger EFC indicates that the energy variation of the speech signal within the time segment is more pronounced and accompanied by more frequent waveform oscillations, reflecting a higher likelihood of rhythm changes in the utterance. Specifically, this coefficient is calculated by taking the product of the squared energy of each frame and the corresponding frame's zero-crossing rate, followed by a weighted average over all frames. This approach captures the intensity of fluctuations in both amplitude and waveform structure. When a user suddenly slows down or accelerates their speech, or exhibits distinct pauses and discontinuities while organizing language, these speech segments often contain syllables with sharp energy changes and frequent waveform transitions, causing the EFC to increase significantly. Therefore, the higher the EFC value, the greater the variation in rhythm continuity of the speech, which can be used to quantify the intensity of sentence rhythm changes and provide critical input for subsequent translation optimization or adjustments to recognition strategies.

In this embodiment, the speech spectrum dispersion index is generated by: extracting the spectral configuration distribution information from the preprocessed rhythm feature information, comprising acquiring spectral feature information of i-th frame of the speech signal acquired by the Bluetooth headset during the speech rate fluctuation period; and constructing, based on the spectral feature information of the i-th frame, a Mel-frequency cepstral coefficient vector, expressed as: ${MFCC}^{i} = \left[{mfcc}_{j}^{i}\right] = \left[{mfcc}_{1}^{i}, {mfcc}_{2}^{i}, ⋯, {mfcc}_{g}^{i}\right]$, wherein MFCCⁱ represents the Mel-frequency cepstral coefficient vector of the i-th frame, comprising g components, ${mfcc}_{j}^{i}$ represents a Mel-frequency cepstral coefficient corresponding to the j-th cepstral component of the i-th frame, wherein i = 1, 2, 3, ..., k, j = 1, 2, 3, ..., g, and k and g are positive integers.

During speech rate fluctuation period, in order to obtain the spectral features of each frame from the user's speech signal collected via the Bluetooth headset and construct the Mel-frequency cepstral coefficient (MFCC) vector, a standard software-based speech signal analysis procedure can be employed. Specifically, the acquired speech signal is first preprocessed, including pre-emphasis, framing, and windowing, to ensure the raw time-domain signal exhibits good short-term stationarity. Subsequently, a fast Fourier transform (FFT) is performed on each frame to obtain the spectral energy distribution, forming the frame's power spectrum. A Mel filter bank is then applied to the power spectrum; the filter design follows the nonlinear frequency perception characteristics of the human auditory system, mapping the frequency domain onto the Mel scale, where low-frequency bands are subdivided and high-frequency bands are compressed, thereby more effectively capturing perceptually relevant speech features. The output of each Mel filter represents the energy in a specific frequency band. These band energies are then converted to their logarithmic values, which compresses the relative differences of high-energy values while retaining variations in low-energy values, enhancing sensitivity to subtle speech components. Finally, a discrete cosine transform (DCT) is applied to the log-Mel energy sequence to decorrelate the spectral coefficients and concentrate the signal energy into the first several coefficients, yielding a compact, low-dimensional MFCC vector with strong discriminative capability. Each component of the vector is a well-defined real number, representing the cepstral characteristics of the speech frame across different frequency bands, typically selecting the first g coefficients for analysis. This entire process can be implemented via standard speech processing libraries (such as Librosa, Python SpeechFeatures, or MATLAB Audio Toolbox), either locally or on embedded systems, providing high efficiency, generality, and scalability. The resulting MFCC vector provides a clear and structured numerical foundation for subsequent extraction of rhythm-related parameters, such as cepstral deviation and cepstral dispersion.

A cepstral feature mean offset value is calculated based on the Mel-frequency cepstral coefficient vector of the i-th frame according to expressions ${mfcc}_{j}^{-} = \frac{1}{k} ∗ {\sum }_{i = 1}^{k} {mfcc}_{j}^{i}$ and ${M}^{i} = \frac{1}{g} ∗ {\sum }_{j = 1}^{g} \left|{mfcc}_{j}^{i}-{mfcc}_{j}^{-}\right|$, where ${mfcc}_{j}^{-}$ represents an average value of the Mel-frequency cepstral coefficient corresponding to the j-th cepstral component over all frames, and Mⁱ represents the cepstral feature mean offset value of the i-th frame.

The cepstral feature average deviation value M' is an important parameter used to quantify the extent to which the i-th speech frame deviates from the overall spectral structure. Essentially, it represents the weighted average of the differences between the Mel-frequency cepstral coefficient (MFCC) vector of that frame and the mean cepstral coefficients across all frames within the speech rate fluctuation segment. In practice, for each cepstral dimension ${mfcc}_{j}^{i}$, the absolute difference with the corresponding mean value ${mfcc}_{j}^{-}$ computed over all frames in the current speech rate fluctuation segment is calculated, reflecting the deviation of that frame in the given frequency dimension relative to the global spectral center. Subsequently, the differences across all frequency bands are averaged to obtain a comprehensive deviation index Mⁱ. A larger M' indicates that the overall spectral shape of the frame is less consistent with the "central spectral shape" of the other frames, suggesting the potential occurrence of frequency restructuring, changes in articulation, or abrupt variations in vocalization patterns. These may manifest as sudden consonant bursts, rapid glottal closures, frequency jumps, or articulatory transitions. Consequently, high Mⁱ values often appear at points of rhythmic shifts, sudden speech rate changes, or syntactic transitions. Conversely, a smaller M' indicates that the frame's spectral pattern is relatively stable and closely aligned with the average spectral expression of the speech rate fluctuation segment, reflecting continuous and smooth speech. Thus, M' not only captures the local-to-global spectral discrepancy but also provides a critical spectral deviation reference for subsequent assessment of rhythm change trends.

A cepstral distribution dispersion value is calculated based on the Mel-frequency cepstral coefficient vector of the i-th frame according to expressions ${μ}^{i} = \frac{1}{g} {\sum }_{j = 1}^{g} {mfcc}_{j}^{i}$ and ${V}^{i} = \frac{1}{g} ∗ {\sum }_{j = 1}^{g} {\left({mfcc}_{j}^{i}-{μ}^{i}\right)}^{2}$, wherein µⁱ is a mean value of the Mel-frequency cepstral coefficients corresponding to all cepstral components in the i-th frame, and Vⁱ represents the cepstral distribution dispersion value of the i-th frame.

The cepstral distribution dispersion value Vⁱ is a quantitative metric used to characterize the degree of internal structural fluctuation within the Mel-frequency cepstral coefficient vector of the i-th speech frame. Essentially, it measures the dispersion of the cepstral coefficients of that frame relative to the intra-frame mean. Specifically, the mean µⁱ of all cepstral components ${mfcc}_{j}^{i}$ within the frame is first computed. Deviations of components from the mean are then squared and averaged, thereby obtaining the dispersion value V'. This process is equivalent to calculating the statistical variance of all spectral features in the frequency-domain dimension for the given frame. A larger V' indicates that the spectral structure of the frame exhibits greater disparity among frequency bands, with a more uneven distribution of spectral energy. This reflects possible phenomena in the speech signal such as articulatory blending, strong harmonic fluctuations, or abrupt formant transitions. Such conditions are often accompanied by sudden changes in articulation, for example transitions from vowels to affricates or complex consonants, or disturbances caused by short pauses, elisions, or dynamic oral movements during speech production. Conversely, a smaller V' suggests that the cepstral structure of the frame is relatively smooth, with consistent spectral variations across frequency bands, indicating good continuity and stability in the spectral structure of the speech expression. Overall, V' serves as a critical indicator for identifying whether a speech rhythm undergoes internal spectral dispersion or perturbation, and the magnitude of this value can be used to assist in determining whether a rhythmic mutation trend is present in the utterance.

The speech spectrum dispersion index is calculated according to expression $SDI = \frac{1}{k} ∗ {\sum }_{i = 1}^{k} exp \left({M}^{i}+{V}^{i}\right)$, where SDI represents the speech spectrum dispersion index.

The speech spectrum dispersion index SDI is calculated to comprehensively evaluate the instability of the spectral structure of each speech frame within a speech-rate fluctuation period, together with its overall deviation trend, thereby enabling sensitive detection of potential rhythmic mutations in utterances. In this context, Vⁱ denotes the cepstral distribution dispersion value of the i-th frame, which characterizes the degree of energy disparity among different frequency bands within the frame. A larger Vⁱ indicates a more uneven spectral pattern of the frame, reflecting local articulation disturbances or variations in harmonic structures. Mⁱ denotes the cepstral feature mean offset value, which measures the degree of deviation between the overall spectral structure of the frame and the average spectral pattern across the speech-rate fluctuation period. A larger M' signifies a more pronounced change in the speech state, such as a transition in articulation manner or a reconfiguration of the vocal tract structure. By summing Mⁱ and Vⁱ, both "intra-frame spectral fluctuation" and "overall structural deviation" dimensions are jointly considered, thereby forming a composite representation with heightened sensitivity to rhythmic mutations in speech. An exponential function is then applied to nonlinearly amplify the total fluctuation intensity, such that frames exhibiting pronounced peaks in Mⁱ+Vⁱ contribute disproportionately to the overall SDI. This enhances the system's ability to detect local rhythmic anomalies. Finally, the results across all frames are averaged, thereby retaining frame-level sensitivity to abrupt changes while also achieving a stable quantification of the rhythmic state for the entire speech segment. This calculation offers advantages of clear theoretical interpretability, robust engineering implementation, and a naturally consistent numerical trend.

The numerical value of the speech spectrum dispersion index SDI is positively correlated with the intensity of rhythmic mutations in user utterances during a speech-rate fluctuation period. A higher SDI indicates a greater likelihood and stronger intensity of rhythmic mutations. The SDI is derived by summing the cepstral distribution dispersion value Vⁱ and the cepstral feature mean offset value Mⁱ of each frame, followed by exponential amplification. This expression captures both local fluctuations in spectral structure and global deviations in spectral contour of the speech signal. A larger Vⁱ indicates that the spectral energy distribution across frequency bands within the frame is uneven, suggesting the presence of harmonic disturbances, unstable articulation, or spectral diffusion phenomena. A larger Mⁱ indicates that the spectral structure of the frame significantly deviates from the average spectral pattern of the entire speech segment, typically associated with articulation transitions or abrupt changes in speech rhythm. Together, Mⁱ and Vⁱ provide dual criteria for identifying rhythmic mutations. By applying an exponential operation to their sum, the influence of mutation frames is further amplified at the whole-segment level. Accordingly, a larger SDI value signifies more intense and unstable frame-level spectral variations, reflecting a higher probability of abrupt turns, jumps, or discontinuities in the overall speech rhythm, thereby characterizing a stronger rhythmic mutation intensity. Conversely, a smaller SDI value indicates continuous, stable, and smooth rhythmic expression, with no significant rhythmic mutation.

In this embodiment, the rhythm abrupt change intensity evaluation model is constructed based on the generated speech energy fluctuation coefficient EFC and the generated speech spectrum dispersion index SDI, and the rhythmic mutation index is generated through weighted summation according to an expression RMI = ω₁ * EFC + ω₂ * SDI , wherein RMI represents the rhythmic mutation index, and ω₁ and ω₂ are non-zero weight coefficients respectively corresponding to the speech energy fluctuation coefficient EFC and the speech spectrum dispersion index SDI, and ω₁ + ω₂ = 1.

In the process of evaluating rhythmic mutation intensity, a rhythmic mutation index (RMI) may be constructed by weighted fusion of the previously computed energy fluctuation coefficient (EFC) and spectrum dispersion index (SDI). Specifically, both indicators are first normalized to the same numerical scale (e.g., mapped to the range [0,1]) to eliminate scale differences. Subsequently, two non-zero weight coefficients ω₁ and ω₂ are introduced, which are respectively multiplied by the normalized EFC and SDI, and the two weighted terms are summed to generate the final RMI. The setting of the two weight coefficients is required to satisfy ω₁ + ω₂ = 1, and both ω₁ and ω₂ are non-zero, so as to ensure that both indicators make substantive contributions in the evaluation. The values of the weight coefficients may be determined based on training corpora or expert knowledge. For example, when spectral variation is to be emphasized, the value of ω₂ may be appropriately increased, whereas when energy dynamic fluctuation is of greater concern, the proportion of ω₁ may be increased. This weighted fusion approach not only preserves the discriminative capability of each indicator, but also adapts to the dynamic adjustment requirements under different speech styles and scenarios, thereby achieving quantitative, adjustable, and sensitive representation of the rhythmic mutation intensity in user utterances during speech-rate fluctuation periods.

In this embodiment, the preset threshold interval [RMI^{min}, RMI^{max}] of the rhythmic mutation index is determined, and then is compared with the generated rhythmic mutation index RMI, and an intensity of rhythm abrupt change in expression by the user during the speech rate fluctuation period is evaluated according to a comparison result as follows.

In case of RMI < RMI^{min}, the intensity of rhythm abrupt change in expression by the user during the speech rate fluctuation period is evaluated as a low intensity.

This situation indicates that, within the current speech rate fluctuation period, the speech signal exhibits only a minor degree of fluctuation in spectral structure, showing neither significant local band energy dispersion nor apparent overall spectral contour deviation. This demonstrates that, although slight variations in speech rate may exist during the utterance, the overall rhythm of the utterance remains coherent, stable, and smooth, without posing a risk of interference to speech segmentation, recognition, or translation. Accordingly, such utterances generally do not require special speech processing strategies and may continue to be processed according to conventional speech-rate and silence-threshold mechanisms for recognition and translation, thereby avoiding unnecessary consumption of computational resources and response delays, and improving the overall operational efficiency and response speed of the system.

In case of RMI^{min} ≤ RMI ≤ RMI^{max}, the intensity of rhythm abrupt change in expression by the user during the speech rate fluctuation period is evaluated as as a medium intensity.

This situation indicates that, within the current speech rate fluctuation period, the speech signal has exhibited a certain degree of instability in rhythmic structure, specifically manifested as increased band energy dispersion in certain frames or as an overall spectral contour beginning to deviate from the mainstream average spectrum, though not yet reaching a state of severe disturbance. Such speech states typically occur at sentence junctions, in the middle of complex sentence structures, or at points of semantic transition, and carry a potential risk of rhythmic discontinuity. Processing conventionally may result in imprecise frame segmentation, recognition delay, or semantic fragmentation. Accordingly, such medium-intensity rhythmic mutations require triggering mild strategy interventions, such as extending the endpoint detection time of speech recognition, adjusting frame window size, or slightly delaying the silence determination threshold, so as to enhance the tolerance of the recognition module to rhythmic uncertainty and improve translation continuity and accuracy.

In case of RMI > RMI^{max}, the intensity of rhythm abrupt change in expression by the user during the speech rate fluctuation period is evaluated as a high intensity.

This situation indicates that the speech expression by the user within the speech rate fluctuation period has a significant mutation, with the frame-level spectral structure exhibiting strong discontinuity and structural shifts, which may include phenomena such as abrupt switching of articulation patterns, rapid concatenation of speech segments, sudden changes in tone, short-term repetitions, or syllable swallowing. In this case, the band energy fluctuates drastically, and the average spectral contour deviates substantially, thereby severely interfering with the conventional recognition path of the speech processing module. If still processed by the standard algorithm, it is highly likely to cause misalignment of speech segmentation, truncation of key words, or false activation of the recognition model, ultimately leading to word-order disorder, semantic misinterpretation, or interruption of sentence meaning in the translation output. Therefore, this level must trigger advanced dynamic intervention strategies, such as adjusting the frame overlap ratio, enabling a context semantic retention mechanism, or delaying recognition adjudication, so as to stabilize the recognition process from multiple dimensions and ensure that the system maintains robust translation accuracy and usability in highly dynamic speech scenarios.

The speech regulation module selects and executes a corresponding speech processing strategy according to the evaluation result, and performs dynamic regulation during an execution process.

In this embodiment, to select and execute the corresponding speech processing strategy according to the evaluation result, the speech regulation module is configured to: in case of the low intensity, select and execute the speech processing strategy comprising: dividing the speech signal into frames using default frame segmentation window parameters, maintaining a standard silence duration threshold and a fixed endpoint detection method, and completing speech segment delimitation in a conventional manner.

In the case where the evaluation result indicates a low intensity, the system may perform speech frame division and speech segment delimitation processing by software using default parameters. Specifically, in the preprocessed speech signal, the speech stream is first divided frame by frame according to predetermined frame length (e.g., 25ms) and frame shift (e.g., 10ms), without adjusting the window overlap ratio or frame duration, so as to maintain balanced temporal coverage of the speech signal. Next, the silence detection module applies standard energy threshold and zero-crossing rate determination rules to identify silent frames and voiced frames in the speech signal, and determines whether a speech segment has ended based on whether the duration of continuous silent frames exceeds the default silence duration threshold (e.g., 200ms). At the endpoint detection stage, a fixed start-stop recognition logic is executed, namely marking the speech segment boundary through the speech energy start point and the silence end point, without performing delay compensation or contextual extension. This approach enables efficient processing of rhythmically stable speech segments at low computational cost, avoiding unnecessary resource consumption while reducing processing latency. Since under low-intensity rhythm mutation conditions the influence of speech rate fluctuations on speech segmentation accuracy is relatively small, no dynamic parameter intervention is required, thereby ensuring the integrity and clarity of the input to the speech recognition module and maintaining overall system operating efficiency and stability in speech translation.

In case of the medium intensity, the selected and executed speech processing strategy comprises adjusting a size of a speech frame segmentation window such that a window duration is increased, increasing a frame overlap ratio, and extending the silence duration thresholds to alleviate a risk of segmentation misjudgment caused by rhythm fluctuation.

In the case where the evaluation result indicates a medium intensity, the system may dynamically adjust speech processing parameters by software in order to enhance adaptability to mild rhythm fluctuations. Specifically, the implementation includes: first, increasing the speech frame segmentation window length (e.g., from a default 25ms to 35ms) and simultaneously raising the frame overlap ratio (e.g., from 40% to 60%). By enlarging the temporal coverage and enhancing inter-frame correlation, the spectral features are expressed with stronger continuity along the time axis, thereby mitigating the influence of speech rate variation on speech segment boundary determination. Next, in the silence detection module, the silence duration threshold is extended from a default value (e.g., 200ms) to a higher value (e.g., 300ms), so that when consecutive silent frames are detected, the system does not prematurely misjudge segment termination, reducing segmentation errors caused by speech rate deceleration or short pauses. The entire process is automatically completed by the speech control module through invoking a parameter configuration interface prior to strategy execution, without requiring hardware intervention, and can respond to evaluation results in real time. The core of this strategy lies in expanding the temporal coverage granularity of frames and extending the silence buffering time to enhance the fault tolerance of the speech processing system to mild rhythm variations, thereby avoiding erroneous splitting or truncation of sentences and ensuring the integrity and continuity of translation semantics.

In case of the high intensity, the selected and executed speech processing strategy comprised: enabling a cross-segment semantic context retention mechanism and enabling a delayed endpoint judgment mode after the adjusting the frame segmentation window and the silence threshold, to avoid a speech segment segmentation error and recognition timing disorder at a rhythm abrupt change point.

In the case where the evaluation result indicates a high intensity, to cope with severe rhythm fluctuations in speech and prevent mis-segmentation or recognition misalignment, the system may implement multi-level advanced speech processing strategies via software. First, based on previously adjusted frame segmentation window length (e.g., increased to 40ms) and silence duration threshold (e.g., increased to 400ms), a cross-segment semantic context retention mechanism is further enabled. Specifically, during speech recognition, a certain number of recognition text buffer frames or language segments of the current speech segment (e.g., 2 seconds preceding and 1 second following) are continuously retained. By constructing a contextual association window, preceding and succeeding sentence semantics are incorporated as input features in the recognition and translation process, thereby reducing recognition mismatches caused by abrupt sentence onsets or mid-sentence interruptions. Simultaneously, a delayed endpoint determination mode is activated: when a potential segment termination signal is detected (e.g., prolonged silence), termination of the speech is not immediately confirmed. Instead, a delay confirmation interval (e.g., 100-150ms) is set, during which continued monitoring of the audio input occurs, and if further activity is detected, the termination judgment is canceled. These mechanisms, implemented via dynamic buffering, predictive control, and deferred endpoint triggering, significantly enhance the speech processing system's adaptability to strong rhythm fluctuation scenarios without compromising real-time performance, ensuring the completeness of translation output, continuity of context, and semantic accuracy.

To perform the dynamic regulation during the execution process, the speech regulation module is configured to: continuously monitor a frame-level spectral energy variation trend of the speech signal and a variation in the silence duration between speech segments during the execution process; immediately switch to a higher-level speech processing strategy, update the speech frame segmentation window parameters and the silence duration threshold, and enable a cross-segment semantic retention function, when the rhythmic mutation index is detected to continuously increase in successive frames and to exceed a maximum threshold corresponding to a current strategy level; and downgrade the current speech processing strategy, switch to the default frame segmentation parameters, and disable an extended processing mechanism, when the rhythmic mutation index is detected to continuously decrease in successive frames and to fall below a minimum threshold corresponding to the current strategy level, thereby realizing real-time dynamic regulation on the processing strategy.

The dynamic regulation of speech processing strategies can be implemented via software by constructing a real-time monitoring and strategy-level linkage mechanism based on the rhythm mutation index (RMI). Specifically, in each processing cycle, the rhythm features of newly collected frames within the speech segments exhibiting speed fluctuations are incrementally updated at fixed intervals (e.g., every 100 milliseconds). The corresponding speech energy fluctuation coefficient (EFC) and speech spectral dispersion index (SDI) are computed in real time, and the latest RMI is generated. The system forms a trend sequence of RMI values over multiple consecutive intervals (e.g., five consecutive frames) and evaluates whether a significant increase or decrease occurs based on the trend. If a continuous increase in RMI is detected and its mean exceeds the maximum threshold corresponding to the current processing strategy, it indicates that rhythm fluctuations are intensifying. In this case, the system instantaneously switches to a higher-level processing strategy via the parameter interface, automatically adjusting the current frame segmentation window length, frame shift parameters, and silence detection thresholds, while activating the cross-segment semantic context retention function to enhance robustness of segmentation and continuity of semantics under severe rhythm disturbance. Conversely, if a continuous decrease in RMI is observed and its mean falls below the minimum threshold corresponding to the current strategy level, the system determines that speech has returned to a stable state and automatically downgrades the processing strategy to a lower-intensity level, restoring default parameter settings and deactivating supplementary processing modules, thereby avoiding resource waste and recognition overfitting. This regulation process relies on continuous indicator streams and decision logic to achieve real-time strategy adjustment without interrupting the recognition workflow, effectively adapting to rapid changes in speech expression and ensuring the stability and accuracy of the speech translation system in dynamic scenarios.

The text verification module performs a language structure and word order verification and adjustment on a recognized text after speech recognition, thereby ensuring that a translated text complies with grammar rules of a target language and maintains semantic coherence.

After completion of speech recognition, the text verification module can automatically check and, if necessary, adjust the linguistic structure and word order of the recognition results via software, thereby improving the grammatical and semantic accuracy and coherence of the translated text. Specifically, the recognized text is first subjected to syntactic parsing, which can be performed using natural language processing (NLP)-based dependency parsing or constituency (phrase structure) analysis to identify linguistic elements such as subject-verb-object relationships, modifier dependencies, and sentence boundaries. Simultaneously, techniques such as part-of-speech tagging, named entity recognition, and phrase chunking are employed to determine the grammatical role of each word within the sentence. Based on a language rule database conforming to the target language grammar, or using a pre-trained language model (e.g., a tree-based reordering model) or sequence learning models (e.g., BiLSTM CRF), the system can detect and correct issues including subject-verb inversion, missing objects, and misplaced modifiers by pattern recognition and reconstruction.

Further, to ensure the reasonableness of word order and semantic coherence in the translated output, the system may evaluate contextual consistency and semantic relevance to assess and optimize the logical connection between multiple sentences. Specifically, the system can model linguistic continuity across sentences based on factors such as lexical cohesion between adjacent sentences, consistency of temporal adverbs, and subject continuity, thereby identifying and mitigating issues caused by speech recognition errors, including semantic jumps, abrupt tone shifts, or inter-sentence logical breaks. Additionally, candidate word order alternatives can be scored using a target language model, and the structure with the highest confidence is selected as the final corrected text output. This process is entirely software-implemented without human intervention, effectively enhancing the linguistic quality of the translated results while maintaining automated system operation, so that users receive translated text that is natural, structurally sound, and semantically complete.

All the above expressions are dimensionless and used for numerical computation. These expressions are derived from extensive data collection and software simulation to approximate the most realistic scenario. The preset parameters within the expressions are configured by skilled personnel in the relevant technical field based on practical conditions.

The above embodiments can be implemented entirely or partially by software, hardware, firmware, or any combination thereof. When implemented in software, the above embodiments can be realized wholly or partially in the form of a computer program product. The computer program product includes one or more computer instructions or programs. When the computer instructions or programs are loaded or executed on a computer, all or part of the processes or functions according to the embodiments of the present disclosure are generated. The computer may be a general-purpose computer, a special-purpose computer, a computer network, or other programmable device. The computer instructions may be stored on a computer-readable storage medium or transmitted from one computer-readable storage medium to another, for example, from a website, computer, server, or data center to another website, computer, server, or data center via wired or wireless means (such as infrared, radio frequency, microwave, etc.). A computer-readable storage medium can be any available medium accessible by a computer, or a data storage device such as a server or data center containing one or more available media. Available media may include magnetic media (e.g., floppy disks, hard disks, magnetic tapes), optical media (e.g., DVDs), or semiconductor media. Semiconductor media may include solid-state drives.

It should be understood that in various embodiments of the present disclosure, the numerical order of the above-described processes does not imply any particular sequence of execution. The execution order of the processes should be determined based on their functions and inherent logic, and should not impose any limitation on the implementation of the embodiments of the present disclosure.

Those skilled in the art should recognize that, in combination with the units and algorithmic steps illustrated in the exemplary embodiments disclosed herein, the described functions can be implemented using electronic hardware, or a combination of computer software and electronic hardware. Whether these functions are executed in hardware or software depends on the specific application and design constraints of the technical solution. Skilled practitioners may employ different implementation methods for each particular application without departing from the scope of the present disclosure.

In the embodiments of the present disclosure, it should be understood that the disclosed systems and methods can be implemented in alternative ways. For example, the embodiments described above are merely illustrative. The division of units is presented solely as a logical functional partitioning; in actual implementation, alternative arrangements are possible. For instance, multiple units or components may be combined or integrated into another system, or certain features may be omitted or not executed. Additionally, any coupling or direct coupling or communication connections shown or discussed may be achieved through some interfaces, devices, or indirect coupling or communication connections between units, which may take electrical, mechanical, or other forms.

The units described as separate components may or may not be physically separate. Components shown as units may or may not be individual physical units; they may be located in a single location or distributed across multiple network units. Depending on actual requirements, some or all of these units can be selected to achieve the objectives of the present embodiment.

Furthermore, the functional units in the various embodiments of the present disclosure may be integrated within a single processing unit, or each unit may exist physically independently, or two or more units may be integrated into one unit.

The above describes only specific embodiments of the present disclosure, and the protection scope of the present disclosure is not limited thereto. Any variations or substitutions that may be readily conceived by those skilled in the art within the technical scope disclosed in the present disclosure should be included within the protection scope of the present disclosure. Therefore, the protection scope of the present disclosure shall be defined by the scope of the claims.

## Claims

1. A speech translation system based on a Bluetooth headset, comprising:
a speech acquisition module configured to acquire speech signal from a user by the Bluetooth headset, preprocess the acquired speech signal, and divide the preprocessed speech signal into a continuous frame sequence according to a preset frame length and a preset frame shift;
a speech rate measurement module configured to establish a time window based on the continuous frame sequence, analyze a variation in a speech rate within the time window, determine a time period in which the user exhibits a significant fluctuation in the speech rate, and identify the determined time period as a speech rate fluctuation period, wherein the significant fluctuation in the speech rate is defined as a fluctuation amplitude exceeding a preset threshold;
a rhythm evaluation module configured to extract rhythm feature information from the speech signal acquired by the Bluetooth headset within the speech rate fluctuation period, analyze the extracted rhythm feature information, and evaluate an intensity of sentence rhythm variation within the speech rate fluctuation period;
a speech regulation module configured to select and execute a corresponding speech processing strategy according to the evaluation result, and to perform dynamic regulation during an execution process; and
a text verification module configured to perform a language structure and word order verification and adjustment on a recognized text after speech recognition, thereby ensuring that a translated text complies with grammar rules of a target language and maintains semantic coherence.

2. The speech translation system according to claim 1, wherein the speech rate measurement module is further configured to:
set a size of the time window based on the continuous frame sequence, and divide the time window into a plurality of time segments;
analyze the variation in the speech rate for each time segment, comprising analyzing a time interval and a variation in speech energy between adjacent frames, and calculating a fluctuation amplitude of the speech rate for the time segment; and
determine a time segment in which the fluctuation amplitude exceeds a preset threshold as the time period in which the user exhibits a significant fluctuation in speech rate, and identify the determined time segment as the speech rate fluctuation period, the fluctuation amplitude is determined by calculating a ratio of the time interval between the adjacent frames to a difference in speech energy between the adjacent frames.

3. The speech translation system according to claim 2, wherein the rhythm evaluation module is configured to:
extract rhythm feature information from the speech signal acquired by the Bluetooth headset within the speech rate fluctuation period, and preprocess the extracted rhythm feature information;
extract acoustic fluctuation feature information and spectral configuration distribution information from the preprocessed rhythm feature information, and analyze the extracted acoustic fluctuation feature information and the extracted spectral configuration distribution information to respectively generate a speech energy fluctuation coefficient and a speech spectrum dispersion index;
construct a rhythm abrupt change intensity evaluation model based on the generated speech energy fluctuation coefficient and the generated speech spectrum dispersion index, and generate a rhythmic mutation index through weighted summation; and
determine a preset threshold interval of the rhythmic mutation index, compare the generated rhythmic mutation index with the preset threshold interval, and evaluate, according to a comparison result, an intensity of rhythm abrupt change in expression by the user during the speech rate fluctuation period.

4. The speech translation system according to claim 3, wherein the speech energy fluctuation coefficient is generated by:
extracting the acoustic fluctuation feature information from the preprocessed rhythm feature information, the acoustic fluctuation feature information comprising an energy value EVⁱ and a zero-crossing rate ZCRⁱ of an i-th frame of the speech signal acquired by the Bluetooth headset during the speech rate fluctuation period, wherein i = 1, 2, 3, ..., k, and k is a positive integer; and
calculating the speech energy fluctuation coefficient according to an expression $EFC = ln \left[1+\frac{1}{k}∗{\sum }_{i = 1}^{k} \left[{\left({EV}^{i}\right)}^{2}∗\left({ZCR}^{i}+1\right)\right]\right] ,$
wherein EFC represents the speech energy fluctuation coefficient.

5. The speech translation system according to claim 4, wherein the speech spectrum dispersion index is generated by:
extracting the spectral configuration distribution information from the preprocessed rhythm feature information, comprising acquiring spectral feature information of i-th frame of the speech signal acquired by the Bluetooth headset during the speech rate fluctuation period; and constructing, based on the spectral feature information of the i-th frame, a Mel-frequency cepstral coefficient vector, expressed as: ${MFCC}^{i} = \left[{mfcc}_{j}^{i}\right] = \left[{mfcc}_{1}^{i}, {mfcc}_{2}^{i}, ⋯, {mfcc}_{g}^{i}\right]$MFCCⁱ wherein MFCCⁱ represents the Mel-frequency cepstral coefficient vector of the i-th frame, comprising g components, ${mfcc}_{j}^{i}$ represents a Mel-frequency cepstral coefficient corresponding to the j-th cepstral component of the i-th frame, wherein i = 1, 2, 3, ..., k, j = 1, 2, 3, ..., g, and k and g are positive integers;
calculating a cepstral feature mean offset value based on the Mel-frequency cepstral coefficient vector of the i-th frame according to expressions ${mfcc}_{j}^{-} = \frac{1}{k} ∗ {\sum }_{i = 1}^{k} {mfcc}_{j}^{i}$ and ${M}^{i} = \frac{1}{g} ∗ {\sum }_{j = 1}^{g} \left|{mfcc}_{j}^{i}-{mfcc}_{j}^{-}\right|$, wherein ${mfcc}_{j}^{-}$ represents an average value of the Melfrequency cepstral coefficient corresponding to the j-th cepstral component over all frames, and Mⁱ represents the cepstral feature mean offset value of the i-th frame;
calculating a cepstral distribution dispersion value based on the Mel-frequency cepstral coefficient vector of the i-th frame according to expressions ${μ}^{i} = \frac{1}{g} {\sum }_{j = 1}^{g} {mfcc}_{j}^{i} and {V}^{i} = \frac{1}{g} ∗ {\sum }_{j = 1}^{g} {\left({mfcc}_{j}^{i}-{μ}^{i}\right)}^{2} ,$ wherein µⁱ is a mean value of the Mel-frequency cepstral coefficients corresponding to all cepstral components in the i-th frame, and Vⁱ represents the cepstral distribution dispersion value of the i-th frame; and
calculating the speech spectrum dispersion index according to expression $SDI = \frac{1}{k} ∗ {\sum }_{i = 1}^{k} exp \left({M}^{i}+{V}^{i}\right)$, wherein SDI represents the speech spectrum dispersion index.

6. The speech translation system according to claim 5, wherein the rhythm abrupt change intensity evaluation model is constructed based on the generated speech energy fluctuation coefficient EFC and the generated speech spectrum dispersion index SDI, and the rhythmic mutation index is generated through weighted summation according to an expression RMI = ω₁ * EFC + ω₂ * SDI, wherein RMI represents the rhythmic mutation index, and ω₁ and ω₂ are non-zero weight coefficients respectively corresponding to the speech energy fluctuation coefficient EFC and the speech spectrum dispersion index SDI, and ω₁ + ω₂ = 1.

7. The speech translation system according to claim 6, wherein determining the preset threshold interval [RMI^{min}, RMI^{max}] of the rhythmic mutation index, comparing the generated rhythmic mutation index RMI with the preset threshold interval, and evaluate, according to a comparison result, an intensity of rhythm abrupt change in expression by the user during the speech rate fluctuation period comprises:
evaluating the intensity of rhythm abrupt change in expression by the user during the speech rate fluctuation period as a low intensity in case of RMI < RMI^{min}
evaluating the intensity of rhythm abrupt change in expression by the user during the speech rate fluctuation period as a medium intensity in case of RMI^{min} ≤ RMI ≤ RMI^{max}; and
evaluating the intensity of rhythm abrupt change in expression by the user during the speech rate fluctuation period as a high intensity in case of RMI > RMI^{max}.

8. The speech translation system according to claim 7, wherein
for selecting and executing the corresponding speech processing strategy according to the evaluation result, the speech regulation module is configured to:
in case of the low intensity, select and execute the speech processing strategy comprising: dividing the speech signal into frames using default frame segmentation window parameters, maintaining a standard silence duration threshold and a fixed endpoint detection method, and completing speech segment delimitation in a conventional manner;
in case of the medium intensity, select and execute the speech processing strategy comprising: adjusting a size of a speech frame segmentation window such that a window duration is increased, increasing a frame overlap ratio, and extending the silence duration thresholds to alleviate a risk of segmentation misjudgment caused by rhythm fluctuation; and
in case of the high intensity, select and execute the speech processing strategy comprising: enabling a cross-segment semantic context retention mechanism and enabling a delayed endpoint judgment mode after the adjusting the frame segmentation window and the silence threshold, to avoid a speech segment segmentation error and recognition timing disorder at a rhythm abrupt change point; and
for performing the dynamic regulation during the execution process, the speech regulation module is configured to:
continuously monitor a frame-level spectral energy variation trend of the speech signal and a variation in the silence duration between speech segments during the execution process;
immediately switch to a higher-level speech processing strategy, update the speech frame segmentation window parameters and the silence duration threshold, and enable a cross-segment semantic retention function, when the rhythmic mutation index is detected to continuously increase in successive frames and to exceed a maximum threshold corresponding to a current strategy level; and
downgrade the current speech processing strategy, switch to the default frame segmentation parameters, and disable an extended processing mechanism, when the rhythmic mutation index is detected to continuously decrease in successive frames and to fall below a minimum threshold corresponding to the current strategy level, thereby realizing real-time dynamic regulation on the processing strategy.
